# EUROPEAN PATENT APPLICATION

(11) **EP 2 325 853 A1**
(43) Date of publication of application: **25.05.2011**
(21) Application number: 09014388.4
(22) Date of filing: 18.11.2009
(51) Int. Cl.: H01F 27/32, C08J 5/24, H01B 3/50, H02K 3/34

(54) **Coil for a transformer**

(71) Applicant: ABB Technology AG, 8050 Zürich (CH)
(72) Inventor: Weber, Benjamin, 59955 Winterberg (DE); Cornelius, Frank, 59936 Olsberg (DE); Tepper, Jens, 59929 Brilon (DE); Zant, Nikolaus, 8048 Zürich (CH); Velthuis, Rudi, 79787 Lauchringen (DE); Schaal, Stephane, Dr., 68510 Sierentz (FR)
(74) Representative: Partner, Lothar

(57) **Abstract**

The invention relates to a coil for a transformer or for corresponding tubular products, where electric fields are typically in the order of 0.1 kV/mm and 10 kV/mm or above, having at least two turns and an intermediate layer of insulating material, where woven fabric tapes, unidirectional tapes, or prepregs are being used as insulating material which provides sufficient distance between the at least two turns of the conductor.

## Description

The invention relates to a coil for a transformer or for corresponding tubular products, where electric fields are typically in the order of 0.1 kV/mm and 10 kV/mm or above, having at least two turns and an intermediate layer of insulation material.

According to EP 1941523 B1 which describes a method for the time- and cost-efficient manufacturing of fiber-reinforced coils with moldfree resin-insulated coil windings in the following will only coils for dry type utilization be regarded.

Generally it is known that conductors for electric current have to be insulated. Hence conventionally the wire is shielded with an insulation which is fixed directly to its surface. High temperatures will damage the winding insulation. Power transformers rated up to several hundred kVA can be adequately cooled by natural convective aircooling, sometimes assisted by fans. In larger transformers, part of the design problem is the removal of heat.

In DE 36 35 975 A a single tow prepreg has been disclosed which is impregnated with a composition comprising 100 parts by weight of a thermosetting resin having a softening point below 20°C and 3 to 30 parts by weight of a high molecular weight compound having a glass transition temperature below -10°C , wherein the single filaments, i.e. some hundred up to some ten thousand single filaments, of which the single tow is composed are carbon, glass, aramide, boron or silicon carbide fibers, and wherein the thermosetting resin is an epoxy resin, a phenolic resin, an unsaturated polyester, an epoxy acrylate, a urethane acrylate or a polyimide.

In DE 1540133 the use of a combination of two tapes of insulation material for the production of a winding insulation, especially of high-voltage coils has been disclosed. In particular it relates to mica insulation tapes, which are impregnated with reactive components of a curable resin, and which serve to produce a winding insulation, in particular for high-voltage coils.

In US 5954909 A a direct adhesive process of adhering conductors such as bare copper wire, copper wire with polymide insulation, and multistrand Kapton wrapped superconductors has been disclosed to mount structures such as a cylinder of arbitrary cross sections, a saddle support, or steel tubes using adhesive layers of material such as BONDALL 16-H, 3M-2090 and T-164. The adhesive layers are subject to b-staging before being used, where it is heated to a temperature of approximately 60-100 °C for approximately 1/2 hour to approximately one hour. The support surface can optionally be grooved to allow for better wire placement and no wire slippage.

The aforementioned materials in the state of the art for insulating purposes are either not provided for use with electrical equipment or they do not comply with the intended mode of application of the insulation to the conductor or both.

Consequently it is an object of this invention to provide an insulation material being used as an intermediate layer with windings for a transformer or for corresponding tubular products, where electric fields are typically in the order of 0.1 kV/mm and 10 kV/mm or above. Accordingly it is a further object to provide an appropriate constitution of the insulation material with special regard to the manufacturing of the coil.

### Summary of invention

The object of this invention is met by prepregs made of woven fabric tapes, unidirectional tapes, or impregnated direct roving (sometimes called "towpreg" or "singletow" being used as insulation material which provides sufficient distance between the at least two turns of the conductor, i.e. that the distance between two neighbouring layers corresponds to the insulation requirements.

### Detailed Description

Advantageously the prepreg is made of any of all non conductive fibers, i.e polymeric or inorganic fibers, preferably an E-glass fiber, and can be used as a direct replacement for wet filament winding materials where advantageously the width of the prepreg has a range from 2 to 1430 mm, preferably 5 mm.

In a preferred embodiment of the prepreg according to the invention consists of fibers having a glass transition temperature T_{g} or a softening point of about 80 °C to 150 °C.

Preferably the prepreg is being allocated to thermal class F or class H according to IEC 60216.

According to the invention the prepreg may have a share of fibers of 55 to 85 % by weight and a share of resin of 45 to 15 % by weight. Accordingly this resin-fiber ratio guarantees a solid base for the insulation layer since only the share of resin may undergo losses in weight. In principle all matrix systems, i.e. thermoplastic as well as thermosetting material are being included for this purpose.

Likewise the prepreg may have a share of solvent of 5 % at maximum but preferably it is free of any solvent.

Furthermore the prepreg is similar in shape to dry rovings which are going to be wet impregnated while the prepregs remain dry. Finally the prepregs will either be heated or cured in another suitable way, e.g. by means of microwaves or ultra violet curing.

According to a further embodiment of the invention the prepreg is consisting of fibers being cross wound on bobbins without any separation film wherein a large length of prepreg is being desired, i.e. 500 m, 1000 m, or more, e.g. 2000 m of prepreg per bobbin as far as feasible, since the processing stability of the bobbins might depend on the amount of prepreg material per bobbin.

These particular features and preferred embodiments as well as the advantages of the invention which are subject matter of the dependent claims shall be illustrated in more detail in the following description.

While the mode of manufacture and of applying the insulation to the conductor respectively to the coil has been disclosed already in the patent EP 1 941 523 B1 granted to the owner of this invention, now the composition and the constitution of the respective composite insulation shall be illustrated in more detail in the following.

As for the prepreg material in principle three types are available:
- woven fabric tapes,
- unidirectional tapes, and
- impregnated direct rovings (relatively fine fibrous strands), i.e. "towpreg" or "singletow".

With regard to this invention all kind of tapes respectively towpregs, like the last one, have been selected.

As for the prepregs which are mainly being used for manufacture of premium components and constructional elements in monolithic or sandwich design these consist preferably either of fibers comprising glass fibers, carbon fibers, or aramide fibers. The properties of those prepregs are characterized by dimensional stability and little shrinkage which allow the manufacture of constructional elements having excellent mechanical properties.

For the winding of the coils it is recommended to use an automated system, preferably a robot or a robotic work cell.

As for the treatment of the prepreg it is important that the pretension of the tape has strong influence on the produced part quality.

Likewise the heating during the processing of the prepreg influences the properties of the prepreg remarkably. Hence preheating of the tape is being provided for improving the final part quality since the viscosity of the B-stage resin may drop at elevated temperature, before final cure. Therefore, the respective mandrel has to be fitted with a controlled heating system in order to achieve best possible working properties and therefore in particular such parameters have to be adjusted to the respective situation.

In general, one can state that the partial discharge behaviour with prepreg winding is about the same as with customary insulation material.

## Claims

1. Coil for a transformer or for corresponding tubular products where electric fields are typically in the order of 0.1 kV/mm and 10 kV/mm or above, having at least two turns and an intermediate layer of insulating material,
**characterized in that**
prepregs like woven fabric tapes, unidirectional tapes, or towpregs are being used as insulating material which provides sufficient distance between the at least two turns.

2. Coil according to claim 1 where the prepreg is containing an E-glass fiber and provided for use as a direct replacement for wet filament winding material.

3. Coil according to one of the preceding claims where the width of the prepreg has a range from 2 to 1430 mm, preferably 5 mm.

4. Coil according to one of the preceding claims where the prepreg has a share of 55 to 85 % weight at a share of resin of 45 to 15 % weight

5. Coil according to one of the preceding claims where the prepreg has a share of solvent of 5% at maximum.

6. Coil according to claim 5 where the prepreg is free of any solvent.

7. Coil according to one of the preceding claims where the prepreg has similar shape as dry roving.

8. Coil according to one of the preceding claims where the prepreg is consisting of fibers being cross wound on bobbins without any separation film.

9. Coil according to claim 8 where the length of prepreg per bobbin is as large as possible but at least 500m.

10. Coil according to one of the preceding claims where the glass transition temperature T_{g} of the prepreg is about 80°C to 150°C.

11. Coil according to one of the preceding claims where the prepreg is being allocated preferably to thermal class F or H according to IEC 60216.

12. Insulating material for a coil according to one of the preceding claims, where the resin being used for impregnation comprises a certain amount of suitable filler.

13. Insulating material according to claim 12 where the filler supports the fire or flame retardancy of the respective product.

14. Insulating material according to claim 12 or 13 where the filler slightly increases the electric conductivity of the resin in order to prevent from electrostatic discharging during the winding process.

15. Insulating material according to at least one of the claims 12 to14 where the filler contains fully or partially filler in order to improve thermal conductivity.
